# EUROPÄISCHE PATENTSCHRIFT

(11) **EP 1 142 942 B1**
(45) Veröffentlichungstag und Bekanntmachung des Hinweises auf die Patenterteilung: **24.05.2006**
(21) Anmeldenummer: 01107565.2
(22) Anmeldetag: 27.03.2001
(51) Int. Cl.: C08J 9/16, C08J 9/00, C08F 12/08, C08L 25/06

(54) **Verfahren zur Herstellung Aluminiumpulver enthaltender expandierbarer Styrolpolymerisate**
Process for producing expandable styrene polymer containing aluminium powder
Procédé de préparation de polymères expansibles du styrène contenant de la poudre d'aluminium

(30) Priorität: 04.04.2000 DE 10016626
(43) Veröffentlichungstag der Anmeldung: 10.10.2001
(73) Patentinhaber: BASF Aktiengesellschaft, 67056 Ludwigshafen (DE)
(72) Erfinder: Glück, Guiscard, Dr., Tokyo 141-0022 (JP); Mronga, Norbert, Dr., 69221 Dossenheim (DE); Hahn, Klaus, Dr., 67281 Kirchheim (DE)

(56) Entgegenhaltungen:
- PATENT ABSTRACTS OF JAPAN vol. 005, no. 053 (M-063), 14. April 1981 (1981-04-14) & JP 56 010432 A (ACHILLES CORP), 2. Februar 1981 (1981-02-02)
- DATABASE WPI Derwent Publications Ltd., London, GB; AN 2000-062911 XP002185184 & AT 9 999 A (SUNPOR KUNSTSTOFF GMBH) 15. Oktober 1999 (1999-10-15) -& AT 406 477 B (SUNPOR KUNSTSTOFF GMBH) 25. Mai 2000 (2000-05-25)

## Beschreibung

Die Erfindung betrifft ein Verfahren zur Herstellung Aluminiumpulver enthaltender expandierbarer Styrolpolymerisate in Partikelform.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten Polystyrolpartikeln und nachfolgendes Verschweißen der so hergestellten Schaumpartikel zu Formkörpern. Ein wichtiges Einsatzgebiet ist die Wärmedämmung im Bauwesen.

Die zur Wärmedämmung eingesetzten Schaumstoffplatten aus Polystyrolpartikelschaum haben zumeist Dichten von etwa 30 g/l, da bei diesen Dichten die Wärmeleitfähigkeit des Polystyrolpartikelschaums ein Minimum aufweist. Aus Gründen der Materialeinsparung bzw. Raumeinsparung wäre es wünschenswert, Schaumstoffplatten mit geringeren Dichten, insbesondere ≤ 15 g/l zur Wärmeisolation einzusetzen. Die Herstellung derartiger Schaumstoffe ist technisch kein Problem. Schaumstoffplatten mit so geringer Dichte weisen jedoch eine drastisch verschlechterte Wärmedämmfähigkeit auf, so daß sie die Anforderungen der Wärmeleitklasse 035 (DIN 18 164, Teil 1) nicht erfüllen.

Nun ist es bekannt, die Wärmeleitfähigkeit von Schaumstoffen durch Einbau von athermanen Materialien, wie Ruß, Metalloxiden, Metallpulver oder Farbstoffpigmenten, zu vermindern.

In EP-A 620 246 werden Formkörper aus Polystyrol-Partikelschaum beschrieben, die ein partikelförmiges athermanes Material, insbesondere Ruß, daneben aber auch Aluminiumpulver, enthalten. Die Dichte der Formkörper liegt unter 20 g/l. Bevorzugt erfolgt das Einarbeiten der Partikel in die Formkörper durch Oberflächenbeschichtung der vorgeschäumten Polystyrolperlen oder durch Einbetten in das noch nicht aufgeschäumte Polystyrol-Granulat. Diese Verteilung der Partikel an der Oberfläche der Polystyrolteilchen führt jedoch zu einer starken Verschlechterung der Verschweißung der vorgeschäumten Perlen und folglich zu Schaumstoffen geringer Güte, außerdem kann es zu einem Abrieb von der Oberfläche des Formkörpers kommen. Auch ein Einbetten der athermanen Partikel in noch nicht aufgeschäumtes Polystyrolgranulat wird als denkbar bezeichnet. Die Partikel sind in beiden Fällen jedenfalls nicht homogen im Innern der Polystyrolteilchen verteilt.

In AT-A 9900099 wird neben der Einarbeitung von Aluminiumpartikeln zusammen mit einem Treibmittel in Polystyrol durch Extrusion auch die Substanzpolymerisation von Styrol zusammen mit Treibmittel in Gegenwart von Aluminiumpartikeln, die in Form eines Polystyrol-Masterbatches vorliegen, beschrieben. Eine Suspensionspolymerisation wird als nicht durchführbar bezeichnet, da Aluminiumpulver von den Styroltröpfchen nicht aufgenommen werden könne.

Die Erfindung lag der Aufgabe zugrunde, ein einfacheres Verfahren zur Herstellung von Aluminiumpulver enthaltenden expandierbaren Styrolpolymerisaten bereitzustellen, die zu Polystyrolpartikelschäumen mit niedriger Dichte und besonders niedriger Wärmeleitfähigkeit verarbeitet werden können, welche gute Verarbeitungseigenschaften und gute physikalische Eigenschaften aufweisen.

Die Aufgabe wurde gelöst durch Suspensionspolymerisation von Styrol in Gegenwart von Aluminiumpulver.

Gegenstand der Erfindung ist ein Verfahren zur Herstellung von Aluminiumpulver in homogener Verteilung enthaltenden, expandierbaren Styrolpolymerisaten, bei dem man Styrol, gegebenenfalls zusammen mit 20 % seines Gewichts an Comonomeren, in wäßriger Suspension in Gegenwart von Aluminiumpulver polymerisiert und vor, während oder nach der Polymerisation ein Treibmittel zusetzt.

In WO 98-51734 ist ein Verfahren zur Herstellung von Graphitpulver enthaltenden, expandierbaren Styrolpolymerisaten beschrieben, bei dem Styrol in wäßriger Suspension in Gegenwart von Graphitpartikeln und Treibmitteln polymerisiert wird. Eine direkte Übertragung dieses Verfahrens auf Aluminiumpulver erschien zunächst nicht möglich, da zu befürchten war, daß bei den anzuwendenden hohen Temperaturen eine Reaktion des Aluminiums mit dem Prozeßwasser und eine Kontaminierung der wäßrigen Phase mit dem Aluminium bzw. dessen Zersetzungsprodukten eintritt. Diese Befürchtung hat sich überraschenderweise ebensowenig bestätigt wie das in AT-A 9900099 erwähnte Vorurteil.

Unter expandierbaren Styrolpolymerisaten werden Treibmittel enthaltende Styrolpolymerisate verstanden.

Die erfindungsgemäß hergestellten expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol.

Bei der erfindungsgemäßen Suspensionspolymerisation können die üblichen Hilfsmittel, wie z.B. Peroxid-Initiatoren, Suspensionsstabilisatoren, Treibmittel, Kettenüberträger, Expandierhilfsmittel, Keimbildner und Weichmacher zugesetzt werden. Besonders bevorzugt ist der Zusatz von Flammschutzmitteln, vorzugsweise in Mengen von 0,6 bis 6 Gew.-% und von Flammschutzsynergisten in Mengen von 0,1 bis 2 Gew.-%, jeweils bezogen auf das resultierende Styrolpolymerisat. Bevorzugte Flammschutzmittel sind aliphatische, cycloaliphatische und aromatische Bromverbindungen, wie Hexabromcyclododecan, Pentabrommonochlorcyclohexan und Pentabromphencylallylether. Geeignete Synergisten sind C-C- oder O-O-labile organische Verbindungen, wie Dicumyl und Dicumylperoxid. Treibmittel werden üblicherweise in Mengen von 3 bis 10 Gew.-%, bezogen auf Styrolpolymerisat zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Die Suspensionspolymerisation wird zweckmäßigerweise in zwei Temperaturstufen durchgeführt. Dabei wird zunächst die Suspension innerhalb von maximal 2 Stunden auf 90°C bis 100°C erhitzt, wobei die Polymerisation eingeleitet wird. Danach läßt man die Reaktionstemperatur, vorzugsweise um 8 bis 17°C pro Stunde, ansteigen bis auf 120 bis 140°C und hält bei dieser Temperatur so lange bis der Restmonomerengehalt auf weniger als 0,1 % abgesunken ist. Es ist zweckmäßig, für eine schnelle Abfuhr der Reaktionswärme zu sorgen.

Berin anspruchsgemäßen Verfahren werden die Aluminiumpartikel in inertisierter Form eingesetzt, wodurch die Bildung von Wasserstoff unterdrückt oder zumindest reduziert wird. Die Inertisierung wird durch Passivierung mit Phosphorverbindungen, z.B. mit Phosphorsäure, deren Salzen oder Derivaten vorgenommen.

Bei einer Ausführungsform des erfindungsgemäßen Verfahrens werden zunächst die Monomeren in Gegenwart des Aluminiumpulvers bis zu einem Umsatz von 1 bis 60 %, vorzugsweise von 10 bis 50 % in Substanz vorpolymerisiert, dann wird die viskose Lösung in ein wäßriges System überführt und in Suspension zu Ende polymerisiert. Die Substanzpolymerisation der ersten Stufe wird vorzugsweise bei Temperaturen zwischen 80 und 120°C durchgeführt, in Gegenwart von styrollöslichen Initiatoren, die bei diesen Temperaturen zerfallen, beispielsweise Dibenzoylperoxid oder tert.-Butylperoxy-2-ethylhexanoat. Bei der Suspensionspolymerisation der zweiten Stufe sollte die Temperatur zwischen 110 und 140°C liegen. Die Suspension enthält die genannten Stabilisatoren sowie Initiatoren, die bei den genannten Temperaturen zerfallen, beispielsweise Dicumylperoxid oder Di-tert.-Amylperoxid. Das Treibmittel wird zweckmäßigerweise in dieser Stufe zugesetzt.

Bei einer weiteren Ausführungsform wird die Viskosität der organischen Phase der Suspension dadurch erhöht, daß man statt Styrol eine 1 bis 30 gew.-%ige Lösung von Polystyrol in monomerem Styrol mit dem Suspensionsmedium Wasser vermischt. Auch hierbei ist dann das Aluminiumpulver in der organischen Phase enthalten. Statt Polystyrol können auch andere in Styrol lösliche Polymere, z.B. Polyphenylenether, eingesetzt werden.

Selbstverständlich ist auch eine Kombination der genannten Ausführungsformen möglich.

Das eingesetzte Aluminiumpulver liegt vorzugsweise in Form dünner Plättchen vor, die einen mittleren Durchmesser von 1 bis 30 µm, vorzugsweise von 3 bis 10 µm und eine Dicke unter 1 bis 2 µm aufweisen. Auch Aluminiumgrieß mit einem mittleren Durchmesser von 1 bis 20 µm ist geeignet.

Das Aluminiumpulver wird bei der erfindungsgemäßen Suspensionspolymerisation bevorzugt in Mengen von 0,1 bis 10, insbesondere von 0,2 bis 5 Gew.-%, bezogen auf die Monomeren, zugegeben. Es wird entweder pulverförmig oder als granulatförmiges Konzentrat in Polystyrol eingesetzt. Bei der Suspensionspolymerisation entstehen perlförmige, im wesentlichen runde Teilchen mit einem mittleren Durchmesser im Bereich von 0,2 bis 2 mm, in denen die Aluminiumpartikel homogen verteilt sind. Sie können mit den üblichen Beschichtungsmitteln, z.B. Metallstearaten, Glycerinestern und feinteiligen Silicaten beschichtet werden.

Die expandierbaren, Aluminiumpartikel enthaltenden Styrolpolymerisate können zu Polystyrolschaumstoffen mit Dichten von 5 bis 35 g/l, bevorzugt von 8 bis 25 g/l und insbesondere von 10 bis 15 g/l, verarbeitet werden.

Hierzu werden die expandierbaren Partikel vorgeschäumt. Dies geschieht zumeist durch Erwärmen der Partikel mit Wasserdampf in sogenannten Vorschäumern.

Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Die aus den erfindungsgemäßen expandierbaren Styrolpolymerisaten hergestellten Schaumstoffe zeichnen sich durch eine hervorragende Wärmeisolierung aus. Dieser Effekt zeigt sich besonders deutlich bei niedrigen Dichten. So konnte durch Zusatz von 2 Gew.-% Aluminium zu einem expandierbaren Styrolpolymerisat bei einer Dichte des Schaumstoffs von 10 g/l die Wärmeleitfähigkeit von 44 mW/m·K auf unter 35 mW/m·K gesenkt werden.

Es hat sich überraschenderweise gezeigt, daß mit der gleichen Menge an Aluminium im Vergleich zu Graphit die Wärmeleitfähigkeit von Polystyrol-Partikelschaumstoffen stärker herabgesetzt werden kann.

Durch die Möglichkeit, bei gleicher Wärmeleitfähigkeit die Dichter der Styrolpolymerisate deutlich zu verringern, lassen sich Materialeinsparungen realisieren. Da im Vergleich mit herkömmlichen expandierbaren Styrolpolymerisaten die gleiche Wärmedämmung mit wesentlich geringeren Schüttdichten erreicht werden kann, können mit dem erfindungsgemäß hergestellten expandierbaren Polystyrolpartikeln dünnere Schaumstoffplatten eingesetzt werden, was eine Raumeinsparung ermöglicht.

Überraschenderweise lassen sich die erfindungsgemäßen expandierbaren Styrolpolymerisate völlig problemlos zu Schaumstoffen geringer Dichte verarbeiten. Es kommt weder zu Treibmittelverlusten noch zu Störungen der Zellstruktur der Schaumstoffe, obwohl der Fachmann annehmen mußte, daß das Aluminiumpulver als Keimbildner wirkt und zu einer unerwünschten Feinzelligkeit des Schaumes führen würde. Außerdem lassen sich durch Zusatzes von Flammschutzmitteln selbstverlöschende Schaumstoffe herstellen, die den Brandtest B2 und in den meisten Fällen sogar B1 bestehen.

## Patentansprüche

1. Verfahren zur Herstellung von Aluminiumpulver in homogener Verteilung enthaltenden, expandierbaren Styrolpolymerisaten, bei dem man Styrol, gegebenenfalls zusammen mit 20 % seines Gewichts an Comonomeren, in Gegenwart von durch Passivierung mit Phosphorverbindungen inertisiertem Aluminiumpulver polymerisiert und vor, während oder nach der Polymerisation ein Treibmittel zusetzt, **dadurch gekennzeichnet, daß** man die Polymerisation in wässriger Suspension durchführt.

2. Verfahren nach Anspruch 1, **dadurch gekennzeichnet, daß** der während der Polymerisation gebildete Wasserstoff geregelt abgeführt wird.

3. Verfahren nach Anspruch 1, **dadurch gekennzeichnet, daß** als inertisiertes Aluminiumpulver mit Phosphorsäure, deren Salze oder Derivate passiviertes Aluminiumpulver eingesetzt wird.

4. Verfahren nach Anspruch 1, **dadurch gekennzeichnet, daß** zunächst die Monomeren in Gegenwart des Aluminiumpulvers bis zu einem Umsatz von 1 bis 60 % in Substanz vorpolymerisiert werden, und dann die Polymerisation in wäßriger Suspension zu Ende geführt wird.

5. Verfahren nach Anspruch 1, **dadurch gekennzeichnet, daß** eine Lösung von 1 bis 30 Gew.-% Polystyrol in Styrol eingesetzt wird.

6. Verfahren nach Anspruch 1, **dadurch gekennzeichnet, daß** man die Polymerisation in Gegenwart von 0,1 bis 10 Gew.-% Aluminiumpulver, bezogen auf die Monomeren, durchführt.

7. Verfahren nach Anspruch 1, **dadurch gekennzeichnet, daß** man die Suspensionspolymerisation in Gegenwart einer organischen Bromverbindung als Flammschutzmittel durchführt.

8. Verfahren nach Anspruch 1, **dadurch gekennzeichnet, daß** das Aluminiumpulver in Form von Plättchen mit einem mittleren Durchmesser von 1 bis 30 µm eingesetzt wird.

9. Verfahren nach Anspruch 1, **dadurch gekennzeichnet, daß** Aluminiumpulver zusammen mit anderen infrarotstrahlenabsorbierenden Substanzen, insbesondere Ruß oder Graphit, eingesetzt wird.

## Claims

1. A process for the preparation of expandable styrene polymers containing aluminum powder in homogeneous distribution, in which styrene, if desired together with 20% of its weight of comonomers, is polymerized in the presence of aluminum powder inertized by passivation using phosphorus compounds, and a blowing agent is added before, during or after the polymerization, which comprises carrying out this polymerization in aqueous suspension.

2. The process according to claim 1, wherein the hydrogen formed during the polymerization is removed in a regulated manner.

3. The process according to claim 1, wherein the inertized aluminum powder used is aluminum powder passivated using phosphoric acid, its salts or derivatives.

4. The process according to claim 1, wherein the monomers are firstly prepolymerized to a conversion of from 1 to 60% without a solvent in the presence of the aluminum powder, and the polymerization is then completed in aqueous suspension.

5. The process according to claim 1, wherein a solution of from 1 to 30% by weight of polystyrene in styrene is employed.

6. The process according to claim 1, wherein the polymerization is carried out in the presence of from 0.1 to 10% by weight of aluminum powder, based on the monomers.

7. The process according to claim 1, wherein the suspension polymerization is carried out in the presence of an organic bromine compound as flame retardant.

8. The process according to claim 1, wherein the aluminum powder is employed in the form of platelets having a mean diameter of from 1 to 30 µm.

9. The process according to claim 1, wherein aluminum powder is employed together with other substances which absorb infrared radiation, in particular carbon black or graphite.

## Revendications

1. Procédé de préparation de polymères de styrène expansibles, contenant de la poudre d'aluminium en répartition homogène, dans lequel on polymérise du styrène, éventuellement conjointement à 20 % de son poids en comonomère, en présence de poudre d'aluminium rendue inerte par passivation avec des composés du phosphore et on ajoute un agent gonflant, avant, pendant ou après la polymérisation, **caractérisé en ce qu'**on effectue la polymérisation en suspension aqueuse.

2. Procédé suivant la revendication 1, **caractérisé en ce que** l'hydrogène formé pendant la polymérisation est évacué de manière réglée.

3. Procédé suivant la revendication 1, **caractérisé en ce que**, comme poudre d'aluminium rendue inerte, on met en oeuvre une poudre d'aluminium passivée par de l'acide phosphorique, ses sels ou dérivés.

4. Procédé suivant la revendication 1, **caractérisé en ce que** les monomères sont tout d'abord prépolymérisés en masse en présence de la poudre d'aluminium jusqu'à une transformation de 1 à 60 % et la polymérisation est ensuite menée à bonne fin en suspension aqueuse.

5. Procédé suivant la revendication 1, **caractérisé en ce qu'**on met en oeuvre une solution de 1 à 30 % en poids de polystyrène dans du styrène.

6. Procédé suivant la revendication 1, **caractérisé en ce qu'**on effectue la polymérisation en présence de 0,1 à 10 % en poids de poudre d'aluminium, par rapport aux monomères.

7. Procédé suivant la revendication 1, **caractérisé en ce qu'**on effectue la polymérisation en suspension en présence d'un composé organique du brome, comme agent ignifuge.

8. Procédé suivant la revendication 1, **caractérisé en ce que** la poudre d'aluminium est mise en oeuvre sous la forme de plaquettes ayant un diamètre moyen de 1 à 30 µm.

9. Procédé suivant la revendication 1, **caractérisé en ce qu'**on met en oeuvre de la poudre d'aluminium conjointement à d'autres substances absorbant les rayons infrarouges, en particulier du noir de fumée ou du graphite.
